# DEMANDE DE BREVET EUROPEEN

(11) **EP 2 085 048 A1**
(43) Date de publication de la demande: **05.08.2009**
(21) Numéro de dépôt: 09151594.0
(22) Date de dépôt: 29.01.2009
(51) Int. Cl.: A61C 5/12, A61C 5/14, A61C 17/06

(54) **Ecarteur de lèvres pour opération dentaire et ensemble de traitement dentaire comprenant un tel écarteur**

(30) Priorité: 30.01.2008 FR 0850550
(71) Demandeur: Prophytec, 01100 Oyonnax (FR)
(72) Inventeur: Bolle, Jean-Pierre, 01100, BELIGNAT (FR); Bolle, Jérémy, 01100, OYONNAX (FR)
(74) Mandataire: Myon, Gérard Jean-Pierre

(57) **Abrégé**

Cet écarteur de lèvres (1) pour opération dentaire comprend une jupe annulaire (2) dont un premier bord (21A) est adapté pour venir en appui contre au moins une gencive d'un patient et deux languettes (9) aptes à être immobilisées entre des dents du patient par appui occlusal. Cet écarteur est fermement immobilisé tant que le patient garde les dents serrées. Il comprend également un écran (10) qui s'étend au voisinage du premier bord (21) de la jupe (2) et à distance (d₁, d₂) de celui-ci, cet écran étant apte à isoler un volume interne de la jupe (2) d'un volume (V₃) situé entre les deux languettes (9).

## Description

La présente invention a trait à un écarteur de lèvres utilisable pour une opération dentaire, c'est-à-dire une intervention sur les dents d'un patient.

Dans le domaine de la chirurgie dentaire, il est connu de maintenir les lèvres et les joues d'un patient à distance de ses dents afin de faciliter le travail du dentiste. Le dentiste peut, par exemple, poser des tiges de coton entre les gencives et les joues du patient. Un écarteur est également connu de EP-A-1 844 728 dans lequel des portions d'écartement sont respectivement prévues pour les lèvres inférieure et supérieure et pour les joues, au niveau des commissures des lèvres. Un tel écarteur est maintenu en position par l'interaction de bandes souples, qui rejoignent entre elles les portions précitées, avec les gencives du patient. L'efficacité de l'écarteur dépend du fait que le patient garde la bouche grande ouverte, ce qui peut s'avérer pénible lorsque l'opération est relativement longue. D'autres écarteurs sont connus, par exemple de WO-A-96/29952 ou de WO-A-00/42939, ces écarteurs étant susceptibles de mouvements vis-à-vis des dents du patient après leur mise en place, sauf à ce qu'ils soient fermement maintenus par le dentiste ou un assistant, ce qui limite l'accès aux dents du patient.

Dans certains types d'opérations tel que le blanchiment des dents au moyen d'un gel réactif, il est connu, par exemple de WO-A-2006/107362, d'utiliser une source de rayonnement lumineux pour faire réagir un gel ou une pâte disposés sur les dents d'un patient. Lors d'une telle opération de blanchiment, l'émail des dents doit être conservé propre et sec pendant une durée relativement longue correspondant au temps d'application et de réaction d'un gel de blanchiment. De même, lors de la pose de « bagues » d'orthodontie, le praticien doit pouvoir accéder aux faces externes des dents conservées propres et sèches.

Il est par ailleurs connu de US-A-2004/0076926 d'équiper un écarteur de lèvres de languettes destinées à être mordues par le patient. Ces languettes sont lisses et de faibles dimensions, de sorte qu'elles n'assurent pas une immobilisation pérenne de l'écarteur dans la bouche du patient. En outre, le rayonnement provenant d'une source de rayons UV peut se propager dans la bouche du patient équipée de cet écarteur, avec un risque d'altération de la muqueuse de la langue.

Les écarteurs de lèvres de l'état de la technique ne donnent pas entièrement satisfaction dans la mesure où, en fonction des mouvements de la mâchoire ou des contractions des joues ou des lèvres du patient, ces écarteurs peuvent être déplacés par rapport aux dents. En outre, la langue du patient est exposée au rayonnement utilisé lorsqu'on souhaite faire réagir un gel de blanchiment.

C'est à ces inconvénients qu'entend plus particulièrement remédier l'invention en proposant un nouvel écarteur de lèvres qui limite les risques d'altération de la muqueuse de la langue du patient.

A cet effet, l'invention concerne un écarteur de lèvres pour opération dentaire comprenant une jupe annulaire, dont un premier bord est adapté pour venir en appui contre au moins une gencive d'un patient, et deux languettes aptes à être immobilisées entre des dents du patient par appui occlusal. Cet écarteur est caractérisé en ce qu'un écran s'étend au voisinage du premier bord de la jupe, à distance de celui-ci, cet écran étant apte à isoler un volume interne de la jupe d'un volume situé entre les deux languettes.

L'écarteur de lèvres de l'invention peut être immobilisé par rapport aux dents du patient en demandant à celui-ci de serrer ses dents sur la ou les languettes, ce qui garantit un positionnement stable et pérenne de l'écarteur tant que le patient ne desserre pas les dents et ce, même s'il bouge les lèvres ou s'il déglutit. En outre, la jupe annulaire, qui a avantageusement une section ovale adaptée à la forme des lèvres d'un utilisateur permet, en venant en appui par son premier bord contre les gencives, d'isoler efficacement les lèvres des dents de l'utilisateur. L'écran permet de protéger la langue du patient par rapport à un rayonnement pénétrant dans la bouche du patient par le volume interne de la jupe, tout en laissant la face externe des dents du patient accessibles pour ce rayonnement, puisque cet écran s'étend à distance du bord de la jupe et ménage ainsi au moins une ouverture de passage des dents.

Selon des aspects avantageux mais non obligatoires de l'invention, un tel écarteur peut incorporer une ou plusieurs des caractéristiques des revendications 2à13.

L'invention concerne également un ensemble de traitement pour le blanchiment de l'émail dentaire qui comprend au moins un écarteur tel que mentionné ci-dessus, ainsi qu'une source de rayonnement, cette source de rayonnement étant apte à être montée sur l'écarteur et immobilisée sur celui-ci par coopération de formes.

Un tel ensemble de traitement permet de concentrer le rayonnement destiné à faire réagir un gel ou une pâte de blanchiment déposé sur les surfaces externes des dents du patient. La source de rayonnement est correctement positionnée du fait de son interaction avec son écarteur.

De façon avantageuse, la source de rayonnement est logée dans un boîtier pourvu d'une partie en saillie de forme complémentaire d'une zone d'entrée de l'écarteur délimitée par la jupe, au voisinage de son deuxième bord opposé à son premier bord qui est adapté pour venir en appui contre la ou les gencives du patient.

L'invention sera mieux comprise et d'autres avantages de celle-ci apparaîtront plus clairement à la lumière de la description qui va suivre, de deux modes de réalisation d'un écarteur et d'un ensemble de traitement conformes à son principe, donné uniquement à titre d'exemple et fait en référence aux dessins annexés dans lesquels :
- la figure 1 est une vue en perspective d'un écarteur de lèvres conforme à l'invention ;
- la figure 2 est une vue en perspective, selon un autre angle, de l'écarteur de la figure 1 ;
- la figure 3 est une vue en perspective, selon encore un autre angle, de l'écarteur des figures 1 et 2 ;
- la figure 4 est une vue de face de l'écarteur des figures 1 à 3 ;
- la figure 5 est une coupe selon la ligne V-V à la figure 4 ;
- la figure 6 est une vue de dessus de l'écarteur des figures 1 à 5, dans le sens de la flèche VI à la figure 4 ;
- la figure 7 est une coupe selon la ligne VII-VII à la figure 6 ;
- la figure 8 est une vue en perspective à plus petite échelle du visage d'un patient équipé de l'écarteur des figures 1 à 6 ;
- la figure 9 est une vue en perspective d'un ensemble de blanchiment des dents comprenant l'écarteur des figures 1 à 7 et une lampe d'éclairement utilisée conjointement à l'écarteur pour le blanchiment des dents d'un patient, cet ensemble n'étant pas assemblé ;
- la figure 10 est une vue en perspective, selon un autre angle, de l'ensemble de la figure 9 en configuration montée de la lampe sur l'écarteur ;
- la figure 11 est une coupe selon les flèches XI-XI à la figure 10 ; et
- la figure 12 est une vue analogue à la figure 3 pour un écarteur conforme à un second mode de réalisation de l'invention.

L'écarteur 1 conforme à l'invention est une pièce monobloc obtenue par moulage de manière plastique, en particulier de propylène de qualité alimentaire teinté en blanc dans la masse. D'autres matériaux peuvent être utilisés pour le moulage de l'écarteur 1, notamment à base d'élastomère.

Le matériau constitutif de l'écarteur 1 est parfumé à la menthe, ce qui confère une sensation de fraîcheur lors de son introduction partielle dans la bouche d'un patient. D'autres parfums peuvent bien entendu être envisagés, de même que l'absence de parfum.

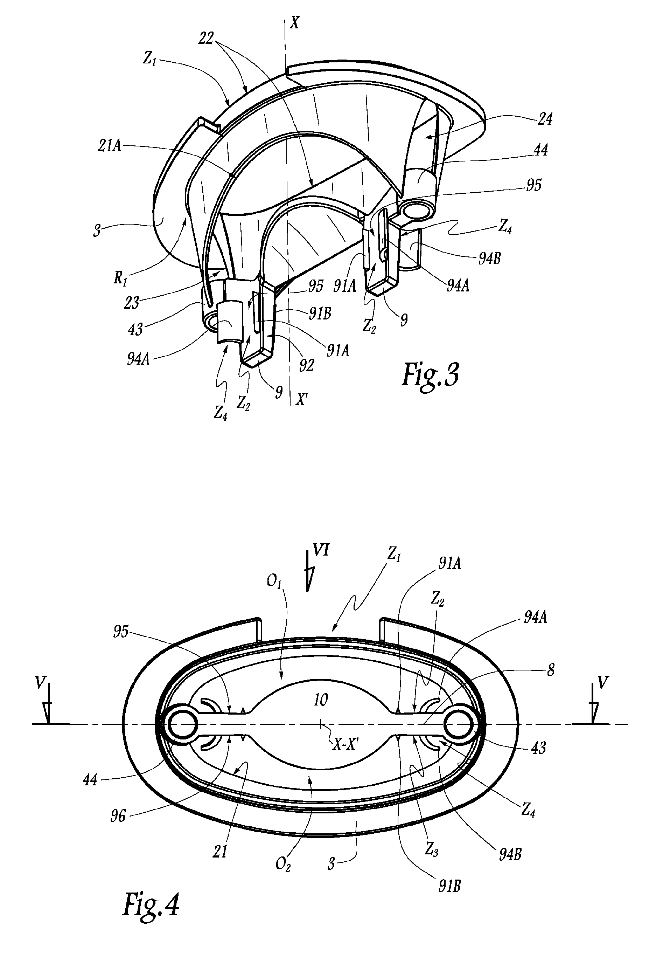

L'écarteur 1 comprend une jupe 2 de section ovale, comme cela ressort de la figure 4, cette jupe étant divergente, d'un premier bord, dit interne 21, vers un deuxième bord 22, dit externe et opposé au bord 21.

Au voisinage de son bord 22, la jupe est entourée par une collerette 3 qui s'étend globalement selon une direction perpendiculaire à un axe central X-X' de la jupe 2, cet axe constituant également un axe central de l'écarteur 1. La collerette 3 entoure la jupe 2 sur l'essentiel de sa circonférence, sauf dans une zone Z₁ ou cette collerette est interrompue pour le passage du nez du patient. La collerette 3 rigidifie la jupe 3 et forme avec celle-ci une zone en forme de coin rentrant R₁ qui entoure la jupe 2, sauf au niveau de la zone Z₁, et qui permet de recevoir les lèvres du patient.

Le bord 21 de la jupe 2 est destiné à venir en appui contre les gencives du patient en étant introduit dans la partie de la bouche de ce patient dans laquelle sont implantées les incisives et les canines. C'est pourquoi, le bord 21 a une configuration courbe adaptée à la géométrie des gencives d'un être humain.

Dans l'exemple représenté, le bord 21 est destiné à venir en appui simultanément contre les gencives supérieure et inférieure du patient. Selon une variante non représentée de l'invention, ce bord peut être conformé pour venir en appui uniquement contre la gencive supérieure ou uniquement contre la gencive supérieure d'un patient.

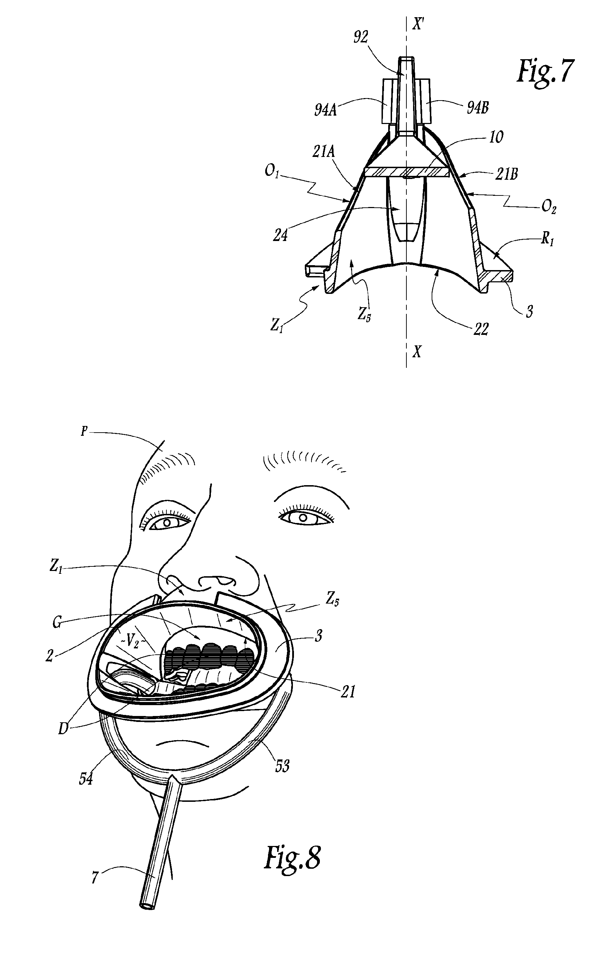

Lorsque le bord 21 est en appui contre les gencives d'un patient P, dont une est visible à la figure 8 avec la référence G, les dents D du patient sont accessibles à travers le volume intérieur V₂ de la jupe 2, ce qui permet à un chirurgien dentiste de travailler sur les dents en question, notamment de blanchir leur émail ou de poser des « boîtiers » orthodontique.

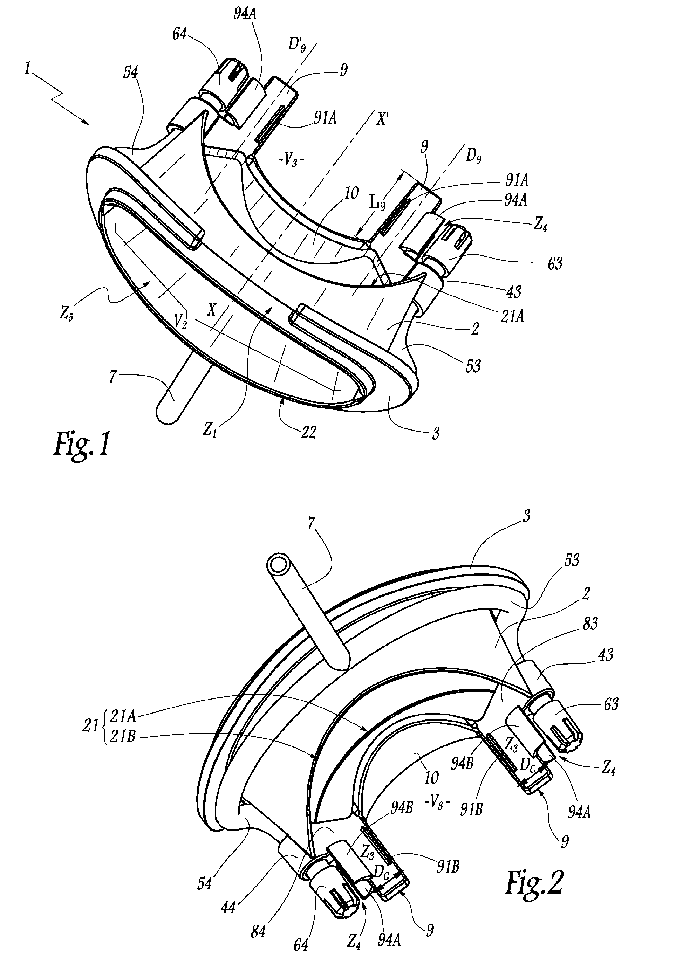

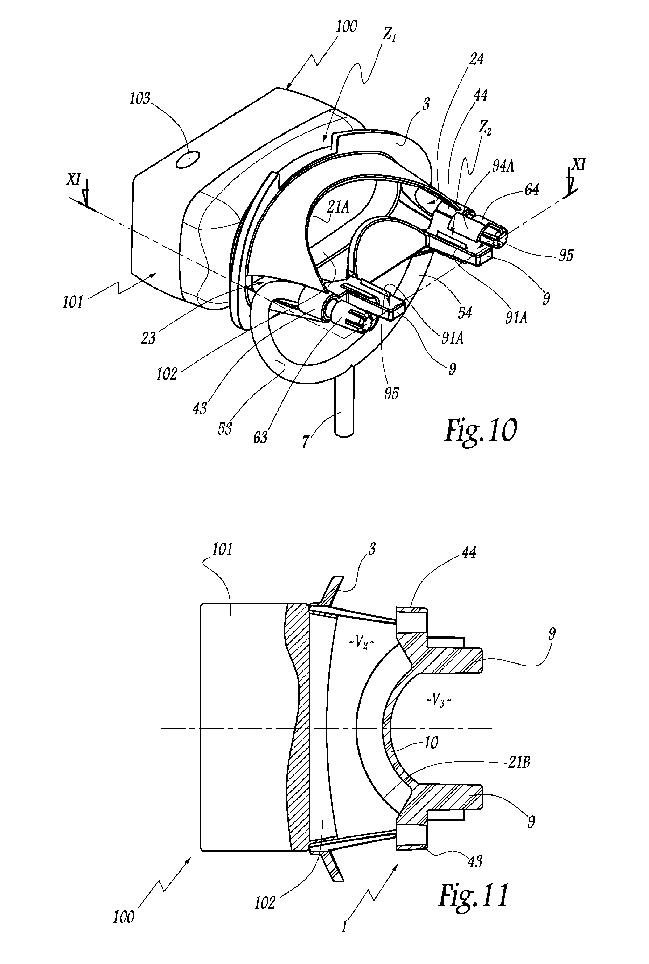

La jupe 2 est interrompue au niveau de deux fentes 23 et 24 à l'extrémité de chacune desquelles est disposé un guide 43 ou 44 constitué par un manchon circulaire. Un tube d'aspiration 53 ou 54 est engagé dans chacun des guides 4 et est équipé d'une crépine terminale 63 ou 64. Les tubes 52 et 54 et les crépines 63 et 64 sont représentés uniquement aux figures 1, 2 et 8 à 10, pour la clarté du dessin. La partie des tubes 53 et 54 qui dépasse de la bouche du patient est visible à la figure 8. Les tubes 53, 54 se rejoignent et sont raccordés à un tube principal 7, lui-même raccordé à une source de vide non représentée, telle qu'une pompe à vide. Selon un aspect non représenté de l'invention, le raccordement entre les tubes 53, 54 et 7 peut avoir lieu au moyen d'un connecteur en T ou en Y.

Le bord 21 comprend une portion supérieure 21 A et une portion inférieure 21 B qui s'étendent chacune du guide 43 au guide 44 et qui sont respectivement prévues pour venir en appui contre les gencives supérieure et inférieure du patient.

Les fentes 23 et 24 constituent respectivement des zones de passage d'une partie des tubes 53 et 54, ce qui évite que ces tubes ne dépassent radialement vers l'extérieur de la jupe 2 d'une façon trop importante qui pourrait blesser le patient au niveau des commissures des lèvres.

La position des tubes 53 et 54 dans les guides 43 et 44 est réglable, dans la mesure où ces tubes peuvent coulisser dans ces guides. Ceci permet au praticien d'adapter la position des crépines 63 et 64 à la morphologie du patient. Les guides 43 et 44 positionnent donc les tubes 53 et 54 avec une possibilité de translation axiale, parallèlement à l'axe X-X', par rapport à la jupe 2 et à l'écran 10.

Une patte 8 relie chaque guide 43 ou 44 à une languette 9 qui s'étend globalement selon une direction D₉ ou D'₉ parallèle à l'axe X-X'. Deux languettes 9 sont ainsi prévues, de part et d'autre de l'axe X-X', dans le prolongement du volume V₂, c'est-à-dire radialement à l'intérieur de la jupe 2.

Chaque languette 9 est équipée de deux nervures 91 A et 91 B situées à proximité de son côté 92 tourné vers l'autre languette. A proximité de son bord 93 opposé à l'autre languette, chaque languette 9 est équipée de deux déflecteurs 94A et 94B qui isolent deux zones Z₂ et Z₃ de la languette 9, comprises respectivement entre la nervure 91 A et le déflecteur 94A et entre la nervure 91 B et le déflecteur 94B, par rapport à une zone Z₄, située de l'autre côté des déflecteurs 94A et 94B et dans laquelle passe l'un des tubes 53 ou 54.

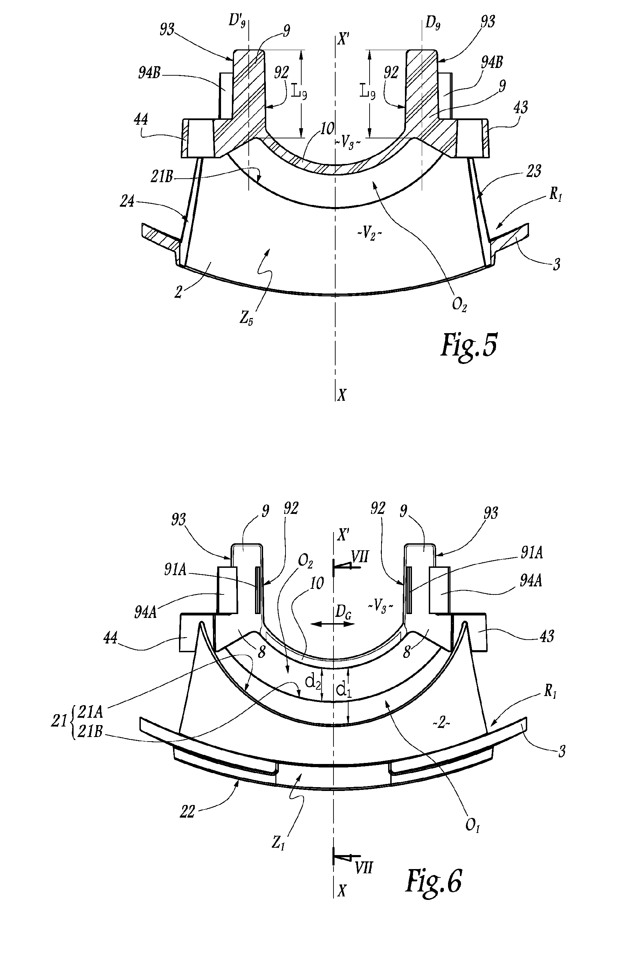

Les languettes 9 sont destinées à être serrées entre les rangées de dents supérieures et inférieures du patient lorsque le bord 21 est en appui contre ses gencives. En d'autres termes, les languettes 9 permettent d'immobiliser l'écarteur 1 dans la bouche du patient par appui occlusal sur les faces opposées 95 et 96 des languettes 9 qui relient les bords 92 et 93 et s'étendent respectivement entre les éléments 91 A et 94A, d'une part, 91 B et 94B, d'autre part, au niveau des zones Z₂ et Z₃. Les nervures 91 A et 91 B, d'une part, et les déflecteurs 94A et 94B, d'autre part, facilitent l'immobilisation des languettes 9 par rapport aux dents du patient en constituant des reliefs anti-glissement, selon une direction perpendiculaire à l'axe X-X' et parallèle aux faces 95 et 96, cette direction étant représentée par les doubles flèches D_{G} aux figures 2 et 6.

La longueur L₉ de chaque languette 9, c'est-à-dire sa dimension prise parallèlement aux directions D₉ et D'₉ et à l'axe X-X', est suffisante pour qu'elle puisse être mordue par plusieurs dents supérieures et plusieurs dents inférieures du patient. Ceci améliore le positionnement de l'écarteur 1 dans la bouche du patient, par rapport au cas où on utilise des languettes en forme de disque, comme dans US-A-2004/0076926.

Un écran 10 relie les languettes 9 en ayant une configuration courbe. L'écran 10 s'entend à distance du bord 21, avec une conformation globalement parallèle à ce bord et en délimitant avec ce bord deux ouvertures O₁ et O₂ à travers lesquelles passent les dents D du patient lorsque le bord 21 est en appui sur ses gencives, comme représenté à la figure 8. L'écran 10 permet d'isoler le volume V₂ d'un volume V₃ situé entre les languettes 9 et dans lequel se situe la langue du patient lorsque le bord 21 est en appui sur ses gencives.

L'écarteur 1 est mis en place dans la bouche du patient en introduisant les languettes 9 entre les rangées de dents D supérieures et inférieures du patient jusqu'à ce que le bord 21 vienne en appui contre les gencives supérieure G et inférieure du patient. Il est alors demandé au patient de serrer les dents, ce qui réalise une immobilisation ferme et pérenne de l'écarteur 1, par appui occlusal au niveau de ses prémolaires. Les incisives et les canines du patient sont alors engagées dans les ouvertures O₁ et O₂ en étant accessibles à travers le volume V₂.

On note respectivement d₁ et d₂ les distances entre l'écran 10 et les portions 21 A et 21 B du bord 21, c'est-à-dire les largeurs des ouvertures 0₁ et 0₂. Comme il ressort notamment de la figure 6, la distance d₁ est supérieure à la distance d₂. En d'autres termes, la portion supérieure 21 A du bord 21 est plus éloignée de l'écran 10 que la portion inférieure 21 B, ceci afin de tenir compte du décalage, selon une direction, antéro-postérieure, entre le maxillaire est la mandibule du patient, c'est-à-dire entre ses mâchoires supérieure et inférieure.

Dans l'exemple des figures les distances d₁ et d₂ sont sensiblement constantes le long des portions 21 A et 21 B. Si la valeur des distances d₁ et d₂ varie sur la longueur des portions 21 A et 21 B, la valeur moyenne de d₁ est supérieure à la valeur moyenne de d₂.

Dans le cas du traitement de l'émail des faces externes des dents en vue de leur blanchiment, le dentiste peut alors apposer sur ces faces externes un gel ou une pâte de blanchiment, telle que connue, par exemple, de EP-A-1 364 635.

Avec certaines pâtes de blanchiment au moins, il est nécessaire d'utiliser un rayonnement pour faire réagir la pâte, un tel rayonnement étant obtenu au moyen d'une lampe.

L'ensemble de traitement pour le blanchiment conforme à l'invention comprend, outre l'écarteur 1, une lampe 100 apte à émettre un faisceau de rayonnement et incluant un boîtier 101 en matière plastique.

Le boîtier 101 est de forme globalement parallélépipédique et comprend une portion en saillie annulaire ou jupe 102 qui constitue la partie avant ou « nez » de la lampe 100 par laquelle sort le faisceau. Les dimensions de la partie 102 correspondent à la zone d'entrée Z₅ du volume V₂ à proximité du bord 22. En d'autres termes, la partie 102 a des dimensions externes transversales correspondant aux dimensions internes de la jupe 2 dans sa zone Z₅ proche du bord 22. Il est ainsi possible de monter la lampe sur l'écarteur 1 en introduisant la partie 102 dans la zone Z₅ du volume V₂. Le boîtier 101 est alors maintenu en place sur l'écarteur 1 par coopération de formes entre la partiel 02 et la jupe 2.

Ainsi, après avoir apposé la pâte ou le gel de blanchiment sur les dents du patient, le dentiste peut aisément mettre en place la lampe 100 sur l'écarteur 1, puis activer celle-ci au moyen d'un interrupteur 103, pour une durée correspondant au traitement à réaliser. Grâce à ce montage de la lampe 100 sur l'écarteur 1, le rayonnement est concentré sur la zone à traiter, à savoir les faces externes des dents du patient, sans interagir notablement avec les gencives ou la langue du patient qui sont respectivement protégées par la jupe 2 et par l'écran 10.

A cet égard, il est possible d'appliquer sur la portion des gencives G qui pénètre dans le volume V₂ à travers les ouvertures 0₁ et 0₂ un gel de protection contre le rayonnement issu de la lampe 100.

Au terme du traitement, la lampe 100 peut être aisément retirée de l'écarteur 1, ce qui donne à nouveau accès au volume V₂ et permet au dentiste de retirer des déchets ou de parfaire le nettoyage des dents. Il est en outre possible de répéter plusieurs fois l'opération mentionnée ci-dessus, en apposant plusieurs fois une pâte ou un gel de blanchiment et en mettant plusieurs fois en action la lampe 100. Au terme de l'opération de blanchiment, l'écarteur 1 peut être aisément retiré après avoir demandé au patient de desserrer les dents.

Dans ce qui précède, on désigne par « lampe » une source de rayonnement destinée à interagir avec une pâte ou un gel. Ce rayonnement n'est pas forcément dans le spectre visible. Il peut en particulier s'agir d'un rayonnement ultra-violet.

L'écarteur 1 peut être prévu en plusieurs tailles adaptées à différentes morphologies de patient. Un ensemble de traitement pour le blanchiment de l'émail dentaire peut comprendre plusieurs écarteurs du type de l'écarteur 1 ci-dessus et une lampe, les zones d'entrée Z₅ des différents écarteurs étant toutes complémentaires du nez 102 de la lampe 100.

L'écarteur 1 a été décrit lors de son utilisation pour le blanchiment des dents d'un patient. Il peut également être utilisé pour la pose de boîtiers d'orthodontie, auquel cas il permet de maintenir les faces externes des dents propres et sèches pendant le temps de prise de la colle utilisée. Il n'est alors pas nécessaire de se servir d'une lampe telle que la lampe 100.

Lors de l'utilisation de l'écarteur 1, pour le blanchiment des dents, pour la pose de bagues d'orthodontie et/ou lors de tout autre utilisation, les tubes d'aspiration 53 et 54 restent en place dans la bouche du patient et leurs extrémités équipées de crépines 63 et 64 sont disposées à l'extérieur des mâchoires, ce qui permet d'aspirer en continu, grâce au tube 7, les déchets et/ou la salive présents dans la bouche du patient.

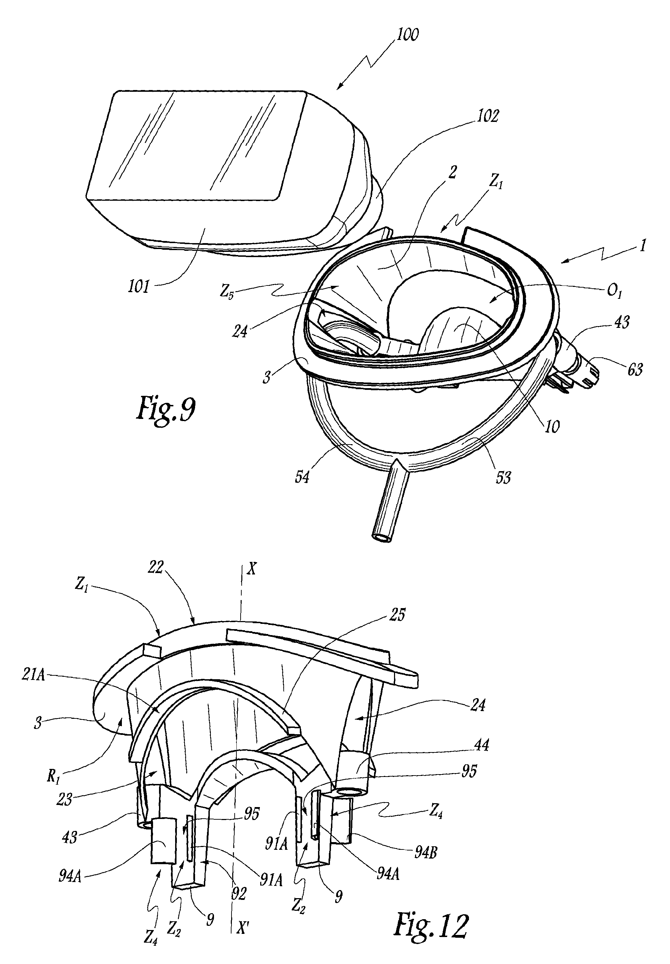

Dans le second mode de réalisation représenté à la figure 12, les éléments analogues à ceux du premier mode de réalisation portent les mêmes références. Dans ce qui suit, on ne décrit que ce qui distingue l'écarteur 1 de ce mode de réalisation du précédent.

La portion 21 A du bord 21 est équipée d'un bourrelet 25 qui retient la lèvre supérieure du patient autour de la jupe 2 lorsque le bord 21A est en appui contre la gencive G.

La portion 21 B est éventuellement équipée d'un tel bourrelet.

A la place d'un bourrelet, on peut utiliser un autre type de relief de retenue, tel qu'une gouttière ou équivalent.

Le relief de retenue, qu'il s'agisse d'un bourrelet ou autre, peut ne s'étendre que sur une partie de la portion 21 A ou 21 B du bord 21 et être continu ou interrompu.

## Revendications

1. Ecarteur de lèvres pour opération dentaire comprenant :
- une jupe annulaire (2) dont un premier bord (21) est adapté pour venir en appui contre au moins une gencive (G) d'un patient (P) et
- deux languettes (9) aptes à être immobilisées entre des dents (D) du patient par appui occlusal,
**caractérisé en ce qu'**il comprend un écran (10) qui s'étend au voisinage du premier bord (21) de la jupe (2) et à distance (d₁, d₂) de celui-ci, cet écran étant apte à isoler un volume interne (V₂) de la jupe d'un volume (V₃) situé entre les deux languettes (9).

2. Ecarteur selon la revendication 1, **caractérisé en ce que** les deux languettes (9) sont destinées à être disposées respectivement entre les rangées de dents (D) supérieures et inférieures gauche et droite du patient et **en ce que** l'écran (10) est monobloc avec les deux languettes (9) qu'il relie l'une à l'autre en s'étendant globalement en parallèle au premier bord (21) de la jupe (2).

3. Ecarteur selon l'une des revendications précédentes, **caractérisé en ce que** l'écran (10) s'étend à une première distance (d₁) d'une portion supérieure (21 A) du premier bord (21) de la jupe (2) et à une deuxième distance (d₂) d'une portion inférieure (21 B) du premier bord de la jupe et **en ce que** la première distance (d₁) a une valeur supérieure à la valeur de la deuxième distance (d₂).

4. Ecarteur selon l'une des revendications précédentes, **caractérisé en ce que** la jupe (2) est entourée, sur la majeure partie au moins de sa circonférence et au voisinage d'un deuxième bord (22) opposé au premier bord, par une collerette externe (3).

5. Ecarteur selon l'une des revendications précédentes, **caractérisé en ce que** la longueur (L₉) de chaque languette (9) est telle qu'elle peut être immobilisée par appui occlusal entre plusieurs dents supérieures et plusieurs dents inférieures du patient.

6. Ecarteur selon l'une des revendications précédentes, **caractérisé en ce que** la ou chaque languette (9) est pourvue d'au moins un relief (91 A, 91 B, 94A, 94B) de limitation du glissement des dents selon une direction (D_{G}) perpendiculaire à un axe central (X-X') de la jupe (2).

7. Ecarteur selon l'une des revendications précédentes, **caractérisé en ce qu'**il est pourvu de moyens (43, 44) de montage et de guidage d'au moins un tube d'aspiration (53, 54).

8. Ecarteur selon les revendications 6 et 7, **caractérisé en ce qu'**au moins un relief (94A, 94B) prévu sur la ou chaque languette (9) isole une zone (Z₂, Z₃) d'appui occlusal sur la languette d'une zone (Z₄) de passage d'un tube d'aspiration (53, 54) au voisinage de la languette.

9. Ecarteur selon l'une des revendications 7 ou 8, **caractérisé en ce que** la jupe (2) est interrompue au niveau de deux fentes (23, 24) à l'extrémité desquelles sont disposés les moyens (43, 44) de montage et de guidage de deux tubes d'aspiration (53, 54) et **en ce que** ces fentes constituent respectivement des zones de passage d'une partie de ces tubes.

10. Ecarteur selon la revendication 7, **caractérisé en ce que** les moyens (43, 44) de montage et de guidage permettent le réglage de la position des tubes d'aspiration (53, 54) par rapport à la jupe (2).

11. Ecarteur selon l'une des revendications précédentes, **caractérisé en ce que** l'écran (10) délimite, avec deux portions (21 A, 21 B) du premier bord (21) de la jupe annulaire (2), deux ouvertures (O₁, O₂) dans lesquelles passent les dents (D) du patient (P) lorsque le premier bord est en appui contre au moins une gencive du patient et **en ce que** ces ouvertures ont des largeurs (d₁, d₂) différentes, l'ouverture (O₁) de passage des dents supérieures du patient étant plus large que l'ouverture (O₂) de passage de ses dents inférieures.

12. Ecarteur selon l'une des revendications précédentes, **caractérisé en ce qu'**il est constitué d'une pièce monobloc (1), notamment une pièce obtenue par moulage de matière plastique.

13. Ecarteur selon l'une des revendications précédentes, **caractérisé en ce que** le premier bord (21) de la jupe (2) comporte, sur une partie au moins de sa longueur, un relief (25) de retenue de la lèvre du patient en position engagée autour de la jupe (2).

14. Ensemble de traitement pour le blanchiment de l'émail dentaire, **caractérisé en ce qu'**il comprend au moins un écarteur (1) selon l'une des revendications précédentes ainsi qu'une source de rayonnement (100) et **en ce que** la source de rayonnement est apte à être montée sur l'écarteur et immobilisée sur celui-ci par coopération de formes (102/2).

15. Ensemble selon la revendication 14, **caractérisé en ce que** la source de rayonnement est logée dans un boîtier (101) pourvu d'une partie en saillie (102) de forme complémentaire d'une zone d'entrée (Z₅) de l'écarteur (1) délimitée par la jupe (2) au voisinage d'un deuxième bord (22), opposé à son premier bord (21) qui est adapté pour venir en appui contre la ou les gencives (G) du patient (P).
